# DEMANDE DE BREVET EUROPEEN

(11) **EP 0 878 663 A1**
(43) Date de publication de la demande: **18.11.1998**
(21) Numéro de dépôt: 98440093.7
(22) Date de dépôt: 12.05.1998
(51) Int. Cl.: F23D 14/66, F23D 14/20

(54) **Bruleur à gaz à haute vitesse de sortie des produits de combustion**

(30) Priorité: 12.05.1997 FR 9705946
(71) Demandeur: Remy, Daniel, 90850 Essert (FR)
(72) Inventeur: Remy, Daniel, 90850 Essert (FR)
(74) Mandataire: Nithardt, Roland

(57) **Abrégé**

La présente invention concerne un brûleur à gaz à haute vitesse de sortie des produits de combustion, notamment pour fours à céramique, qui a pour but d'améliorer le principe de refroidissement en proposant un brûleur dont les parois de la chambre de combustion sont refroidies par l'air entrant, la totalité de cet air étant ensuite diffusé dans la chambre de combustion et mélangé au gaz. En outre le fait que l'air soit chauffé facilite l'inflammation du mélange.

Le brûleur (10) est caractérisé en ce qu'il comporte un espace annulaire (8) divisé en au moins deux parties distinctes par au moins deux cloisons longitudinales (19, 20) diamétralement opposées s'étendant de la paroi arrière à la paroi avant dudit espace, chaque partie étant elle-même subdivisée par une cloison intermédiaire (22, 22') en deux canaux de circulation d'air longitudinaux communicants, et en ce que ladite paroi arrière (18) comporte au moins deux ouvertures débouchant chacune dans un desdits canaux de sorte que l'air arrivant par l'orifice d'amenée d'air (25) pénètre dans lesdits canaux par les deux ouvertures.

## Description

La présente invention concerne un brûleur à gaz à haute vitesse de sortie des produits de combustion, notamment pour fours à céramique, comportant un corps tubulaire composé d'une enveloppe extérieure cylindrique et d'une douille intérieure formant une chambre de combustion, montée coaxialement à l'enveloppe extérieure et pourvue à son extrémité arrière d'un diffuseur dont l'extrémité ouverte définit un orifice d'alimentation en gaz de ladite chambre, l'autre extrémité de ladite douille étant ouverte et formant le col du brûleur, l'ensemble formé par la chambre et le diffuseur étant plus court que l'enveloppe extérieure, dans lequel l'enveloppe extérieure et la douille intérieure définissent entre elles un espace annulaire pour la circulation d'air fermé à l'extrémité avant par une paroi de forme annulaire formant le nez du brûleur et à son extrémité arrière par une paroi semi-annulaire de diamètre égal au diamètre intérieur de l'enveloppe extérieure et solidaire de l'orifice d'alimentation en gaz, le brûleur comportant en outre au moins un orifice d'amenée d'air ménagé dans la paroi latérale de la partie arrière de l'enveloppe extérieure, délimitée par la paroi arrière de la chambre de combustion et un élément de fermeture arrière et de support d'une bougie d'allumage.

Dans les brûleurs à haute puissance actuellement utilisés dans l'industrie et notamment dans les fours pour la cuisson de la céramique, les parois de la chambre de combustion sont soumises à des températures élevées ce qui entraîne des problèmes de corrosion et aboutit à une rapide pourriture du brûleur.

Le brûleur objet du brevet FR 2 232 966 remédie en partie à cet inconvénient en étant conçu pour permettre à l'air injecté de refroidir la paroi extérieure et la paroi intérieure de la chambre de combustion avant son introduction dans ladite chambre. Cependant le circuit de l'air est tel qu'il ne permet pas de maintenir l'enveloppe extérieure à une température suffisamment chaude pour être au-dessus des points de rosée. De ce fait, cette enveloppe subit une attaque corrosive de la part des acides contenus dans les produits de condensation. De plus les vitesses de l'air sont trop rapides pour élever la température du flux avant son introduction dans le laboratoire, ce qui ne permet pas d'augmenter la vitesse d'inflammation, d'où l'impossibilité de réduire les dimensions de la chambre de combustion. En outre, ce brûleur doit comporter trois enveloppes, d'où une perte de charge importante et un coût de fabrication élevé.

De même, le générateur de gaz chaud décrit dans la publication française FR-A-2 293 664 comprend une chambre de combustion entourée de deux cylindres concentriques de manière à former des canaux annulaires coaxiaux pour la circulation de l'air. Da part cette construction en deux couches de circulation, la paroi extérieure n'est pas réchauffée. Elle ne sera donc pas suffisamment chaude pour être au-dessus du point de rosée de sorte qu'elle subira une attaque corrosive en particulier dans une ambiance humide et/ou acide. De plus, ce générateur devant comporter trois enveloppes est d'un coût de fabrication élevé.

La présente invention a pour but de pallier ces inconvénients en proposant un brûleur dont les parois de la chambre de combustion sont refroidies par l'air entrant, la totalité de cet air étant ensuite diffusé dans la chambre de combustion et mélangé au gaz. En outre le fait que l'air soit chauffé facilite l'inflammation du mélange.

A cet effet le brûleur tel que défini en préambule est caractérisé en ce que l'espace annulaire est divisé en au moins deux parties distinctes par au moins deux cloisons longitudinales diamétralement opposées s'étendant de la paroi arrière à la paroi avant dudit espace, chaque partie étant elle-même subdivisée par une cloison intermédiaire en deux canaux de circulation d'air longitudinaux communicants, et en ce que ladite paroi arrière comporte au moins deux ouvertures débouchant chacune dans un desdits canaux de sorte que l'air arrivant par l'orifice d'amenée d'air pénètre dans lesdits canaux par les deux ouvertures.

Dans la forme de réalisation préférée, le diffuseur a une forme tronconique et comporte des perforations sur au moins deux secteurs de sa périphérie, lesdits secteurs perforés dudit diffuseur étant logés chacun dans un des canaux définis par les cloisons intermédiaires et qui sont fermés par la paroi arrière de ladite chambre de combustion.

De préférence, les ouvertures ont une forme de secteurs cylindriques et sont diamétralement opposées, ladite forme des secteurs cylindriques étant identique à la forme de la section des canaux définis par les cloisons intermédiaires.

Dans toutes les formes de réalisation les cloisons intermédiaires ont une longueur inférieure à la longueur de l'espace annulaire.

De façon avantageuse la paroi de fermeture avant de l'espace annulaire est plate.

Dans une autre forme de réalisation, le brûleur comporte un circuit primaire et un circuit secondaire d'amenée du gaz et une chambre de prémélange de l'air et du gaz.

Dans une variante de réalisation, le diffuseur du brûleur selon l'invention comporte une collerette solidaire d'une partie tronconique, ladite collerette et ladite partie tronconique étant pourvues de perforations.

La présente invention sera mieux en référence à la description d'exemples de réalisation préférés et des dessins annexés dans lesquels :
La figure 1 est une vue latérale en coupe axiale d'une première forme de réalisation du brûleur selon l'invention,
La figure 2 est une vue en coupe arrière en coupe selon le plan D-D du brûleur de la figure 1,
La figure 3 est une vue en coupe latérale d'une deuxième forme de réalisation du brûleur selon l'invention,
La figure 4A est une vue en coupe latérale d'une troisième forme de réalisation du brûleur de la figure 1, et
La figure 4B est une vue en coupe du diffuseur équipant le brûleur illustré par la figure 4A.

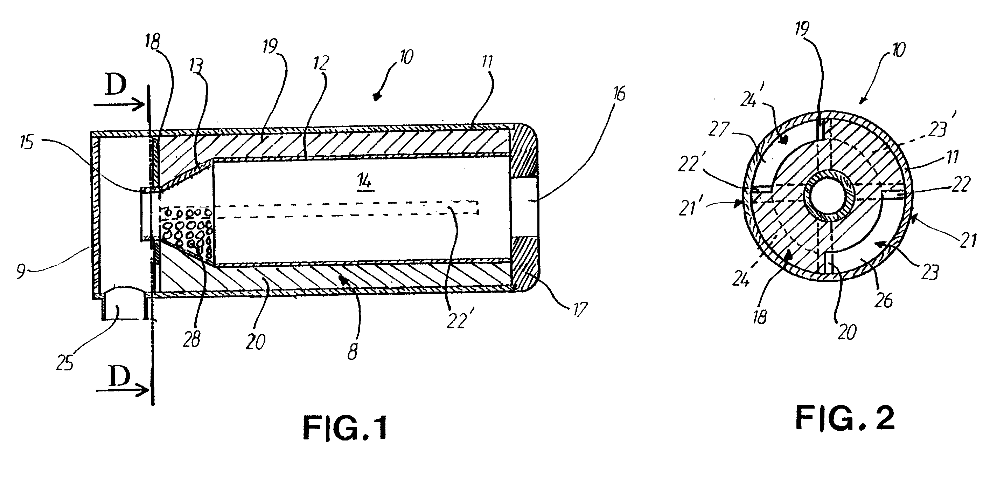

En référence aux figures 1 et 2, le brûleur 10 comporte un corps tubulaire composé d'une enveloppe extérieure cylindrique 11 réalisée en fonte ou en acier réfractaire et d'une douille intérieure cylindrique 12, d'un diamètre inférieur au diamètre intérieur de l'enveloppe 11, réalisée en acier réfractaire. Cette douille est coaxiale à l'enveloppe 11 et est pourvue à l'une de ses extrémité d'une partie conique 13 convergente formant le diffuseur du brûleur. L'ensemble formé par la douille 12 et la partie conique 13 est plus court que l'enveloppe extérieure 11 et forme la chambre de combustion 14 du brûleur. L'extrémité ouverte de cette partie conique 13 constitue l'orifice d'alimentation en gaz 15 de la chambre 14. L'extrémité opposée de la douille 12 est ouverte et forme le col de sortie 16 des gaz du brûleur. L'enveloppe 11 et la douille 12 définissent entre elles un espace annulaire 8. Cet espace est fermé à son extrémité qui constitue la partie avant du brûleur par une paroi annulaire plate 17 qui forme le nez du brûleur, et à son extrémité arrière par une paroi semi-annulaire 18. Deux cloisons longitudinales 19 et 20 diamétralement opposées sont disposées dans cet espace et délimitent deux partie distinctes 21, 21'. Chaque partie 21, 21' est divisée en son milieu par une cloison intermédiaire longitudinale 22 respectivement 22' parallèle aux cloisons 19, 20, dont la longueur est inférieure à la longueur de la douille 12 et qui définit deux canaux 23, 24 respectivement 23', 24'. Ces canaux communiquent entre eux par l'espace existant entre les cloisons intermédiaires 22, 22' et la paroi annulaire plate 17. L'enveloppe extérieure 11 comporte, dans la paroi latérale de sa partie située derrière la chambre de combustion 14 et délimitée d'une part par la paroi arrière 18 et d'autre part par un élément de fermeture arrière 9, un orifice 25 d'amenée de l'air devant se mélanger au gaz. L'élément de fermeture 9 est agencé pour supporter de façon connue en soi un conduit d'amenée du gaz, la bougie d'allumage et une éventuelle sonde d'ionisation (non représentés).

La paroi 18 a une forme annulaire. Son diamètre intérieur est égal au diamètre extérieure de l'orifice d'alimentation en gaz 15 et son diamètre extérieur est égal au diamètre intérieur de l'enveloppe 11. Cette paroi comporte, dans l'exemple de réalisation décrit par ces figures, deux ouvertures 26, 27, diamétralement opposées, en forme de secteurs cylindriques dont la forme correspond à la section des canaux 23, 23' respectivement 24, 24' Ces ouvertures débouchent respectivement dans les canaux 23 et 24'.

La partie conique 13 de la chambre de combustion 14, qui constitue le diffuseur du brûleur, est pourvue sur deux secteurs de sa périphérie de perforations 28. Ces deux secteurs perforés sont diamétralement opposés et sont situés dans les canaux 23' et 24.

Le principe de fonctionnement de ce type de brûleur est le suivant. L'air arrive dans le brûleur par l'orifice latéral 25, pénètre par les deux ouvertures 26 et 27 respectivement dans les canaux 23 et 24' et circule dans ces canaux jusqu'à la paroi 17. Lorsqu'il bute contre cette paroi il passe dans l'espace existant entre les cloisons intermédiaires 22 , 22' et ladite paroi et revient par les canaux 23' et 24. Lorsqu'il rencontre les secteurs perforés de la partie conique, il pénètre dans la chambre de combustion 14 par les perforations 28 et se mélange au gaz directement injecté par l'orifice d'alimentation 15. L'allumage du mélange se fait au moyen d'une bougie (non représentée) située dans la partie arrière de l'enveloppe 12 dans laquelle l'air est introduit par l'orifice 25. Le front de flamme se développe à l'intérieur de la chambre de combustion 14 et les produits de combustion s'évacuent par le col de sortie 16.

Les avantages que présente ce mode de réalisation sont les suivants :
- la chambre de combustion est refroidie sur toute sa périphérie par la totalité du volume de l'air injecté,
- la forme plate du nez du brûleur engendre une turbulence supplémentaire de l'air, ce qui homogénéise et favorise le mélange air/gaz, et limite la quantité des gaz imbrûlés,
- l'inflammation du mélange air/gaz est facilitée par le fait que l'air mélangé s'est chauffé en refroidissant les parois de la chambre de combustion,
- l'enveloppe extérieure du brûleur est réchauffée, ce qui la préserve lorsque le brûleur se trouve dans un environnement pollué,
- la forme conique du diffuseur permet d'obtenir une combustion plus étagée dans la chambre de combustion,
- la bougie d'allumage étant placée dans une partie froide, il n'est plus nécessaire qu'elle comporte un isolant en céramique. Elle peut être pourvue d'un isolant en matière synthétique, ce qui diminue sensiblement son coût de fabrication.

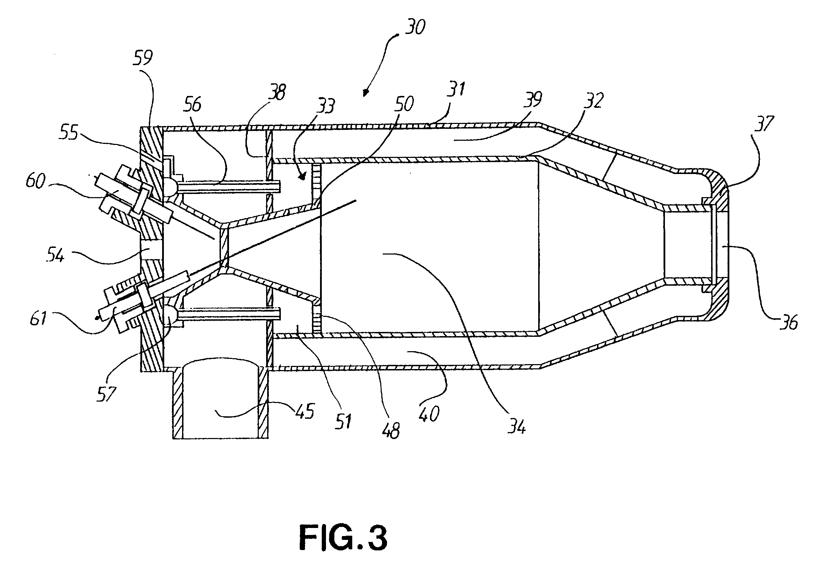

La figure 3 illustre une autre forme de réalisation du brûleur selon l'invention qui fonctionne sur le même principe que le brûleur cylindrique décrit en référence aux figures 1 et 2 mais qui permet de réduire sa taille dans le cas de grosse puissance. A cet effet ce brûleur comporte un corps tubulaire 30 composé d'une enveloppe extérieure 31 comportant une partie cylindrique et une partie conique convergente prolongée par une partie cylindrique, formant l'avant du brûleur et d'une douille intérieure 32, comportant elle aussi une partie cylindrique et une partie conique convergente prolongée par une partie cylindrique formant le col du brûleur 36, coaxiale à l'enveloppe 31. Ces deux éléments définissent entre eux un espace annulaire fermé à son extrémité avant par une paroi annulaire 37 et à son extrémité arrière par une paroi annulaire 38. Comme dans la forme de réalisation précédemment décrite, cet espace annulaire est divisé en canaux de refroidissement par des cloisons de séparation 39 et 40 et des cloisons intermédiaires (non représentées) coopérant avec des ouvertures de la paroi arrière 38. La chambre de combustion 34 définie par la douille 32 et cette paroi 38 renferme un diffuseur 33 formé par une partie tronconique portée par une plaque annulaire 50 délimitant une chambre 51 à l'arrière de la chambre de combustion 34, la partie supérieure de ladite partie tronconique étant solidaire de la paroi arrière 38. La périphérie de la partie du diffuseur située dans la chambre 51 ainsi que la plaque annulaire sont pourvues de perforations 48. La partie arrière de l'enveloppe 32 délimitée par la paroi arrière 38 de la chambre de combustion 34 et par un élément de fermeture arrière 59 est pourvue sur sa face latérale d'un orifice d'amenée de l'air 45.

L'élément de fermeture 59 est pourvu en son centre d'un orifice d'arrivée de gaz primaire 54 et vers son bord extérieur d'un orifice d'arrivée de gaz secondaire 55 coopérant avec deux tubulures de transfert secondaires 56 et 57, ces deux tubulures débouchant dans la chambre 51. Cet élément de fermeture sert également de support à une bougie d'allumage 60 et à une sonde de contrôle 61 débouchant dans la chambre de combustion 34.

Le principe de fonctionnement de cette forme de brûleur comportant deux circuits de gaz est le suivant. Pendant la phase d'allumage ou de petite allure, l'air est amené dans la chambre de combustion 34 par le diffuseur 33 après son passage dans les canaux de refroidissement. Le gaz y est directement injecté par l'orifice primaire 54 et enflammé par la bougie d'allumage 60. Lorsque la flamme est établie et détectée par la sonde 61, le gaz passe par l'orifice secondaire 55 et est amené par les tubulaires 56 et 57 dans la chambre 51, qui est en fait une chambre de prémélange, pour se mélanger à l'air qui a effectué le circuit de refroidissement tel que décrit en référence aux figures 1 et 2. Le mélange air/gaz est ensuite introduit dans la chambre de combustion 34 par les perforations 48 du diffuseur 33.

Cette conception de brûleur permet d'obtenir des vitesses de sortie des produits de combustion supérieures à 350 m/s tout en limitant sa longueur mais peut s'adapter à toutes les puissances voulues à condition de prévoir le nombre des canaux de refroidissement nécessaires.

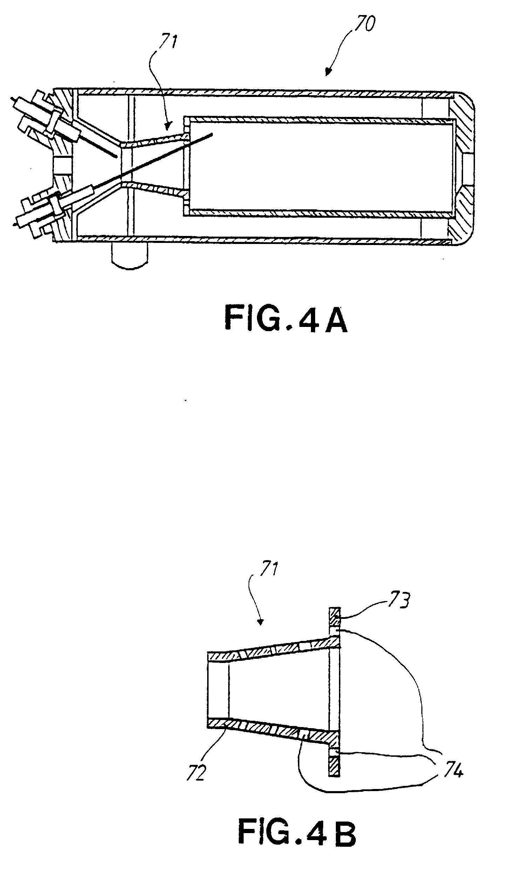

La figure 4A représente une autre forme de réalisation d'un brûleur de petite puissance. Ce brûleur 70 est une variante du brûleur décrit en référence aux figures 1 et 2 et est plus particulièrement destiné à des installations à furnisterie épaisse. Il est équipé d'un diffuseur 71, représenté par la figure 4B, qui se compose d'une partie tronconique 72 pourvue à son extrémité de plus grand diamètre d'une collerette 73 agencée pour former la paroi arrière de la chambre de combustion du brûleur. Ce diffuseur est pourvu de perforations 74 sur la partie tronconique 72 et sur la collerette 73. Cette forme de diffuseur permet d'avoir une combustion plus étagée tout en continuant de refroidir la paroi intérieure de la chambre de combustion par l'air entrant par les perforations de la collerette 73.

Tous les éléments composant ces différents types de brûleurs peuvent être obtenus par des moyens conventionnels de fabrications tels que l'emboutissage, le repoussage ou le roulage, ce qui diminue considérablement leur coût de fabrication. De plus la souplesse de leur fonctionnement permet de les utiliser aussi comme générateurs d'air chaud à basse température.

La présente invention n'est pas limitée aux formes de réalisations décrites mais peut subir différentes modifications évidentes pour l'homme du métier. En particulier la longueur du brûleur peut varier en fonction des puissances que l'on veut obtenir et le nombre des canaux de refroidissent peut être augmenté lorsque la puissance de sortie devient plus élevée.

## Revendications

1. Brûleur à gaz à haute vitesse de sortie des produits de combustion, notamment pour fours à céramique, comportant un corps tubulaire composé d'une enveloppe extérieure (11; 31) cylindrique et d'une douille intérieure (12; 32), formant une chambre de combustion (14; 34), montée coaxialement à l'enveloppe extérieure et pourvue à son extrémité arrière d'un diffuseur (13; 33), dont l'extrémité ouverte définit un orifice d'alimentation en gaz (15) de ladite chambre, l'autre extrémité de ladite douille étant ouverte et formant le col (16; 36) du brûleur, l'ensemble formé par la chambre et le diffuseur étant plus court que l'enveloppe extérieure, dans lequel l'enveloppe extérieure et la douille intérieure définissent entre elles un espace annulaire (8) pour la circulation d'air fermé à l'extrémité avant par une paroi (17; 37) de forme annulaire formant le nez du brûleur et à son extrémité arrière par une paroi semi-annulaire (18; 38) de diamètre égal au diamètre intérieur de l'enveloppe extérieure et solidaire de l'orifice d'alimentation en gaz, le brûleur comportant en outre au moins un orifice d'amenée d'air (25; 45) ménagé dans la paroi latérale de la partie arrière de l'enveloppe extérieure (11; 31), délimitée par la paroi arrière (18; 38) de la chambre de combustion (14; 34) et un élément (9; 59) de fermeture arrière et de support d'une bougie d'allumage, caractérisé en ce que ledit espace annulaire (8) est divisé en au moins deux parties distinctes par au moins deux cloisons longitudinales (19, 20) diamétralement opposées s'étendant de la paroi arrière à la paroi avant dudit espace, chaque partie étant elle-même subdivisée par une cloison intermédiaire (22, 22') en deux canaux de circulation d'air longitudinaux communicants (23, 23', 24, 24'), et en ce que ladite paroi arrière (18; 38) comporte au moins deux ouvertures (26, 27) débouchant chacune dans un desdits canaux (23, 24') de sorte que l'air arrivant par l'orifice d'amenée d'air (25) pénètre dans lesdits canaux (23, 24') par les deux ouvertures (26, 27).

2. Brûleur selon la revendication 1, caractérisé en ce que le diffuseur (13) a une forme tronconique et comporte des perforations (28) sur au moins deux secteurs de sa périphérie.

3. Brûleur selon la revendication 2, caractérisé en ce que les secteurs perforés du diffuseur (13) sont logés chacun dans un (23', 24) des canaux définis (23, 23', 24, 24') par les cloisons intermédiaires (22, 22') et qui sont fermés par la paroi arrière (18) de ladite chambre de combustion (14).

4. Brûleur selon la revendication 1, caractérisé en ce que les ouvertures ont une forme de secteurs cylindriques (26, 27) et sont diamétralement opposées.

5. Brûleur selon la revendication 4, caractérisé en ce que la forme des secteurs cylindriques (26, 27) est identique à la forme de la section des canaux (23, 24') définis par les cloisons intermédiaires (22, 22').

6. Brûleur selon la revendication 1, caractérisé en ce que les cloisons intermédiaires (22, 22') ont une longueur inférieure à la longueur de l'espace annulaire (8) défini par l'enveloppe extérieure (11) et la douille intérieure (12).

7. Brûleur selon la revendication 1, caractérisé en ce que la paroi de fermeture (17) avant de l'espace annulaire (8) est plate.

8. Brûleur selon la revendication 1, caractérisé en ce qu'il comporte un circuit primaire (54, 56) et un circuit secondaire (55, 57) d'amenée du gaz.

9. Brûleur selon la revendication 8, caractérisé en ce qu'il comporte une chambre (51) de prémélange de l'air et du gaz.

10. Brûleur selon la revendication 1, caractérisé en ce que le diffuseur (71) comporte une collerette (73) solidaire d'une partie tronconique (72).

11. Brûleur selon la revendication 10, caractérisé en ce que la collerette et la partie tronconique comportent des perforations (74).
